# FASCICULE DE BREVET EUROPEEN

(11) **EP 3 073 752 B1**
(45) Date de publication et mention de la délivrance du brevet: **18.10.2017**
(21) Numéro de dépôt: 16161668.5
(22) Date de dépôt: 22.03.2016
(51) Int. Cl.: H04N 21/4405, H04N 21/6437, H04N 21/6334, H04N 21/835, H04N 21/266, H04L 9/06

(54) **PROCÉDÉ DE GENERATION D'UN VECTEUR D'INITIALISATION POUR LE CHIFFREMENT D'UN CONTENU VIDEO**
VERFAHREN ZUR ERZEUGUNG EINES INITIALISIERUNGSVEKTORS FÜR DIE VERSCHLÜSSELUNG EINES VIDEOINHALTS
METHOD FOR GENERATING AN INITIALISATION VECTOR FOR THE ENCRYPTION OF VIDEO CONTENT

(30) Priorité: 23.03.2015 FR 1500564
(43) Date de publication de la demande: 28.09.2016
(73) Titulaire: THALES, 92400 Courbevoie (FR)
(72) Inventeur: BOYADJIS, Benoit, 92622 GENNEVILLIERS CEDEX (FR); BERGERON, Cyril, 92622 GENNEVILLIERS CEDEX (FR); LECOMTE, Sébastien, 92622 GENNEVILLIERS CEDEX (FR)
(74) Mandataire: Dudouit, Isabelle

(56) Documents cités:
- US-A1- 2005 207 580
- DANANG TRI MASSANDY ET AL: "Secured video streaming development on smartphones with Android platform", TELECOMMUNICATION SYSTEMS, SERVICES, AND APPLICATIONS (TSSA), 2012 7TH INTERNATIONAL CONFERENCE ON, IEEE, 30 octobre 2012 (2012-10-30), pages 339-344, XP032275867, DOI: 10.1109/TSSA.2012.6366079 ISBN: 978-1-4673-4549-1
- ZHUO WEI ET AL: "A scalable and format-compliant encryption scheme for H.264/SVC bitstreams", SIGNAL PROCESSING: IMAGE COMMUNICATION, vol. 27, no. 9, 1 octobre 2012 (2012-10-01), pages 1011-1024, XP055211540, ISSN: 0923-5965, DOI: 10.1016/j.image.2012.06.005
- "Study of ISO/IEC 23001-7:201X DIS 3rd edition", 111. MPEG MEETING;6-2-2015 - 20-2-2015; GENEVA; (MOTION PICTURE EXPERT GROUP OR ISO/IEC JTC1/SC29/WG11),, no. N15204, 24 février 2015 (2015-02-24), XP030021930,
- SUNGOH HWANG: "S_DRM_CE_Reprot", 103. MPEG MEETING; 21-1-2013 - 25-1-2013; GENEVA; (MOTION PICTURE EXPERT GROUP OR ISO/IEC JTC1/SC29/WG11),, no. m27635, 23 janvier 2013 (2013-01-23), XP030056200,
- BENOIT BOYADJIS ET AL: "A real-time ciphering transcoder for H.264 and HEVC streams", 2014 IEEE INTERNATIONAL CONFERENCE ON IMAGE PROCESSING (ICIP), 1 octobre 2014 (2014-10-01), pages 3432-3434, XP055211425, DOI: 10.1109/ICIP.2014.7025697 ISBN: 978-1-47-995751-4
- BOYADJIS BENOIT ET AL: "Auto-synchronized selective encryption of video contents for an improved transmission robustness over error-prone channels", 2015 IEEE INTERNATIONAL CONFERENCE ON IMAGE PROCESSING (ICIP), IEEE, 27 septembre 2015 (2015-09-27), pages 2969-2973, XP032827016, DOI: 10.1109/ICIP.2015.7351347 [extrait le 2015-12-09]

## Description

L'invention concerne un procédé et un dispositif permettant notamment de générer un vecteur d'initialisation unique et synchronisable qui, combiné à une clé de chiffrement, permet le chiffrement d'un flux de données vidéo compressé et le déchiffrement à partir d'une trame quelconque du flux de données après chiffrement. Elle s'applique dans le cadre du chiffrement sélectif, dans des applications de traitement de flux vidéo compressés, dans des applications de sécurité des données vidéo compressées par chiffrement sélectif. Le chiffrement sélectif est une technique de chiffrement ne chiffrant pas l'intégralité d'un message ou d'un flux de données vidéo compressé à transmettre.

Dans un système de chiffrement, il existe, entre autres, deux problématiques à prendre en compte: d'une part la transmission sécurisée de la clé de chiffrement et d'autre part la gestion du vecteur d'initialisation. Clé de chiffrement et vecteur d'initialisation sont nécessaires pour la construction, par un générateur pseudo-aléatoire (GPA) de type bloc, d'une séquence pseudo-aléatoire permettant de piloter le chiffrement. Les mécanismes garantissant un échange sécurisé de la clé de chiffrement sont connus de l'homme du métier. De même, l'homme du métier connaît les modes d'opération génériques pour la gestion des messages clairs et chiffrés au sein d'un algorithme de chiffrement par blocs. Concernant le vecteur d'initialisation, et d'un point de vue sécurité, il est important de ne pas utiliser le même vecteur d'initialisation pour l'ensemble du flux de données afin d'éviter et/ou de minimiser des attaques éventuelles. De plus, il est essentiel de gérer la synchronisation d'une modification de ce vecteur d'initialisation en cas de pertes éventuelles de données ou d'erreurs pouvant survenir dans le déchiffrement. Cette méthode de synchronisation ne doit ni engendrer de latence supplémentaire dans le traitement des données, ni nécessiter l'envoi de données supplémentaires (augmentation du débit de la communication).

Le brevet US 8160157 du demandeur décrit un procédé de chiffrement sélectif qui sélectionne des mots de code pour réaliser le chiffrement sélectif du flux de données.

La publication de Z.Shahid intitulée « Fast Protection of H.264/AVC by selective encryption of CAVLC and CABAC for I and P frames », IEEE transactions on CSVT, 2011 décrit un procédé de chiffrement et de déchiffrement qui entraîne, en cas d'erreur de transmission, une désynchronisation prohibitive du chiffrement du flux.

Le chiffrement sélectif permet de protéger un flux vidéo compressé de façon non détectable par une analyse dudit flux. En effet, le procédé garantit la conformité du flux chiffré avec le format du flux initial. Le chiffrement sélectif ne doit par ailleurs nécessiter aucune transmission d'information complémentaire afin de garantir la discrétion de son application; gage supplémentaire de sécurité.

Le document US 2005/0207580 concerne un procédé et un système de synchronisation dans lequel on associe un emplacement mémoire à une donnée chiffrée.

La publication de Danang Tri Massandy et al, XP032275867, « Secured vidéo streaming development on smartphones with Android platform » concerne un procédé de chiffrement des données basé sur l'algorithme standard AES et le protocole de transport utilisé pour la transmission de données, le protocole RTP.

Le document de Zhuo Wei et al, intitulé « A scalable and format-compliant encryption scheme for H.264/SVC bitstreams », XP055211540, enseigne d'utiliser un générateur de clé pour chiffrer un flux de données.

Les solutions décrites dans l'art antérieur connu du demandeur ne prennent pas véritablement en compte la spécificité du chiffrement sélectif:
- Elles nécessitent la transmission d'un vecteur d'initialisation en complément du flux de données compressé chiffré si ce vecteur d'initialisation est modifié,
- Elles ne permettent pas d'identifier des points de resynchronisation adaptés à l'application du chiffrement sélectif sur des flux vidéo compressés en temps-réel; la resynchronisation du déchiffrement en cas de pertes de données n'est donc pas supportée,
- Elles ne proposent pas d'architecture adaptée à la transmission sans fil, par exemple sur un support en temps réel RTP (Real-Time Transport Protocol),
- Il n'est pas possible avec les méthodes actuelles de commencer le déchiffrement à partir d'une trame quelconque de la vidéo compressée,
- Elles ne proposent pas de solution pour une utilisation en temps réel sur un lien de transmission avec pertes ou erreurs.

Dans la suite de la description, les abréviations suivantes seront utilisées :
AVC : codage vidéo avancé ou en anglo-saxon Advanced Video Coding,
SVC : codage vidéo adaptable ou en anglo-saxon Scalable Video Coding,
HEVC : codage vidéo à haute efficacité ou en anglo-saxon High Efficiency Video Coding,
NALU: Unité de couche d'abstraction réseau ou Network Abstraction Layer Unit,
VCL : couche de codage vidéo ou Video Coding Layer
RTP : protocole de données soumises à des contraintes de temps ou Real-time Protocol Transport,
MMTP : protocole de transport de données multimédia MPEG ou MPEG Media Transport Protocol,

La description utilisera les définitions suivantes :
Séquence pour désigner une suite de bits.
Graine = séquence utilisée pour initialiser un outil de génération de suites de bits ou clés,
Compteur = séquence représentant une variable incrémentée d'un pas fixe à chaque utilisation,
Vecteur d'initialisation (IV) = séquence utilisée en entrée d'un générateur pseudo-aléatoire (ou bloc de chiffrement) en complément d'une clé de chiffrement pour produire une séquence chiffrante,
Clé de chiffrement = séquence partagée utilisée pour le chiffrement et le déchiffrement d'un message,
Séquence chiffrante = séquence pseudo-aléatoire, générée par un bloc de chiffrement, utilisée pour chiffrer une séquence du flux à chiffrer,
Séquence à chiffrer = séquence issue d'un message à transmettre et destinée à être protégée par une opération de chiffrement,
Séquence chiffrée = séquence obtenue par une opération XOR entre une séquence chiffrante et une séquence à chiffrer,
Générateur d'IV = fonction permettant de générer un vecteur d'initialisation IV à partir d'une graine.
Générateur pseudo-aléatoire (ou bloc de chiffrement) GPA= fonction permettant de générer une suite chiffrante à partir d'une clé de chiffrement et d'un vecteur d'initialisation IV,
Opérateur XOR = opérateur logique ou-exclusif,
Unité autonome Ui pour désigner de manière générique une portion de flux vidéo où la graine reste constante.

L'invention concerne un procédé de synchronisation d'un mécanisme de chiffrement et de déchiffrement de données contenues dans un flux vidéo compressé Fc constitué de données chiffrables et de données non chiffrables, au sein d'un système de transmission sécurisé utilisant un protocole de transport et un mode de codage des données, caractérisé en ce qu'il comporte au moins les étapes suivantes :
a) Extraire les informations protocolaires liées au protocole de transport temps réel RTP afin de générer une graine K ou séquence de bits, en utilisant l'identifiant de synchronisation de source SSRC contenu dans un en-tête RTP, un paramètre représentatif de l'instant d'affichage relatif d'une NALU contenue dans le paquet RTP, l'ordre d'affichage des images par rapport à une image de référence d'un groupement d'images ou GOP en cours de codage, le numéro de la couche de rehaussement, et l'adresse de début de la « slice » au sein d'une image,
b) Générer un vecteur d'initialisation IV pour le chiffrement à partir de la graine K et actualiser le vecteur d'initialisation à chaque changement d'un des éléments constitutifs de la graine K,
c) Spécifier un intervalle d'application du vecteur d'initialisation IV sur le flux de données et chiffrer les éléments chiffrables en utilisant une séquence chiffrante issue d'un générateur pseudo-aléatoire prenant en entrée une clé de chiffrement et le vecteur d'initialisation IV généré à l'étape b).

L'invention concerne aussi un procédé de synchronisation d'un mécanisme de chiffrement et de déchiffrement de données contenues dans un flux vidéo compressé Fc constitué de données chiffrables et de données non chiffrables, au sein d'un système de transmission sécurisé utilisant un protocole de transport et un mode de codage des données, caractérisé en ce qu'il comporte au moins les étapes suivantes :
d) Extraire les informations protocolaires liées au protocole de transport MMTP afin de générer une graine K ou séquence de bits, en utilisant un identifiant de packet « packet_id », un identifiant « packet_sequence_number» et un paramètre « timestamp » représentatif de l'instant d'affichage contenus dans un en-tête MMTP, l'ordre d'affichage des images par rapport à une image de référence d'un groupement d'images ou GOP en cours de codage, le numéro de la couche de rehaussement, et l'adresse de début de la « slice » au sein de l'image,
e) Générer un vecteur d'initialisation IV pour le chiffrement à partir de la graine K et actualiser le vecteur d'initialisation à chaque changement d'un des éléments constitutifs de la graine K,
f) Spécifier un intervalle d'application du vecteur d'initialisation IV sur le flux de données et chiffrer les éléments chiffrables en utilisant une séquence chiffrante issue d'un générateur pseudo-aléatoire prenant en entrée une clé de chiffrement et le vecteur d'initialisation IV généré à l'étape b).

Le flux de données peut être composé de plusieurs unités et lorsque le nombre d'éléments à chiffrer contenus dans une unité du flux vidéo est supérieur à la taille de la séquence chiffrante générée par le générateur de pseudo-aléa, GPA, le procédé génère dans un premier temps une première séquence chiffrante à partir d'un premier vecteur d'initialisation, puis dans un deuxième temps génère une nouvelle séquence chiffrante avec un mode d'opération cryptographique.

L'algorithme de chiffrement utilisé pour la mise en oeuvre du procédé est le mode AES.

Le mode d'opération de chiffrement choisi peut être le mode compteur (CTR), et un champ compteur de 16 bits initialisé à zéro est alloué.

Dans le cas d'une application H.264/AVC-SVC ou HEVC/SHVC, on introduit un point de resynchronisation au niveau de chaque début de NALU, le point de resynchronisation étant déclenché par un changement de graine.

A l'initialisation d'une communication avec un protocole RTP, le procédé comporte, par exemple, une étape d'initialisation des paramètres « timestamp » et SSRC en dehors d'une étape de mise en paquets des données vidéo.

En cours de communication utilisant un protocole RTP, le procédé génère, par exemple, un aléa supplémentaire sur un nombre de bits de poids faible du « timestamp ».

A l'initialisation d'une communication avec un protocole MMTP, le procédé peut comporter une étape d'initialisation des paramètres « timestamp », « packet_sequence_number » et « packet_id » en dehors d'une étape de mise en paquets des données vidéo.

En cours de communication utilisant un protocole MMTP, le procédé comporte, par exemple, une étape de génération d'un aléa supplémentaire sur un nombre de bits de poids faible du « timestamp ».

Selon une variante de mise en oeuvre, le mode d'opération est le mode CTR et on génère aussi un aléa sur au moins une partie du champ réservé au compteur.

Selon une variante de réalisation, le vecteur d'initialisation est généré sur 128 bits.

L'invention concerne aussi un dispositif de génération pseudo-aléatoire d'éléments chiffrant et de point de synchronisation pour un flux de données vidéo décomposable en plusieurs unités autonomes caractérisé en ce qu'il comporte au moins les éléments suivants :
- Un module d'extraction d'éléments non chiffrables du flux de données (message vidéo compressé et informations de niveau supérieur) afin de constituer une graine K selon les étapes du procédé de l'invention,
- Un module de génération de vecteurs d'initialisations, utilisant une graine K pour générer une séquence de bits, caractérisé en ce que le module de génération d'IV est adapté à déclencher un point de resynchronisation à chaque fois que la graine utilisée change, et en ce que le vecteur d'initialisation IV est recalculé à chaque point de resynchronisation.
- Un générateur pseudo-aléatoire GPA adapté à générer une séquence chiffrante en utilisant un vecteur d'initialisation et une clef de chiffrement.

L'algorithme de chiffrement est, par exemple, l'algorithme AES.

Le mode d'opération utilisé dans le dispositif est, par exemple, le mode CTR, et le protocole de transport est le protocole RTP.

Selon une autre variante, le mode d'opération utilisé est le mode CTR, et le protocole de transport est le protocole MMTP.

D'autres caractéristiques et avantages de la présente invention apparaitront mieux à la lecture de la description qui suit, d'exemples de réalisation, annexée des figures qui représentent :
- La figure 1, un rappel de la mise en paquets des trames vidéo par le protocole RTP,
- La figure 2, le déroulement des étapes permettant le chiffrement d'une séquence,
- La figure 3, un exemple de schéma pour le serveur chiffreur,
- La figure 4, un exemple de schéma pour un client déchiffreur synchronisé,
- La figure 5, un exemple de dispositif de décompression d'un flux de données,
- La figure 6, un exemple d'implémentation du vecteur d'initialisation, et
- La figure 7, un schéma décrivant un exemple d'étapes mises en oeuvre dans le procédé selon l'invention.

Afin de mieux faire comprendre le procédé mis en oeuvre dans la présente invention, l'exemple qui suit est donné à titre illustratif et nullement limitatif dans le cas d'un flux vidéo protégé par chiffrement sélectif avec l'algorithme de chiffrement AES-CTR et transmis sur un lien RTP.

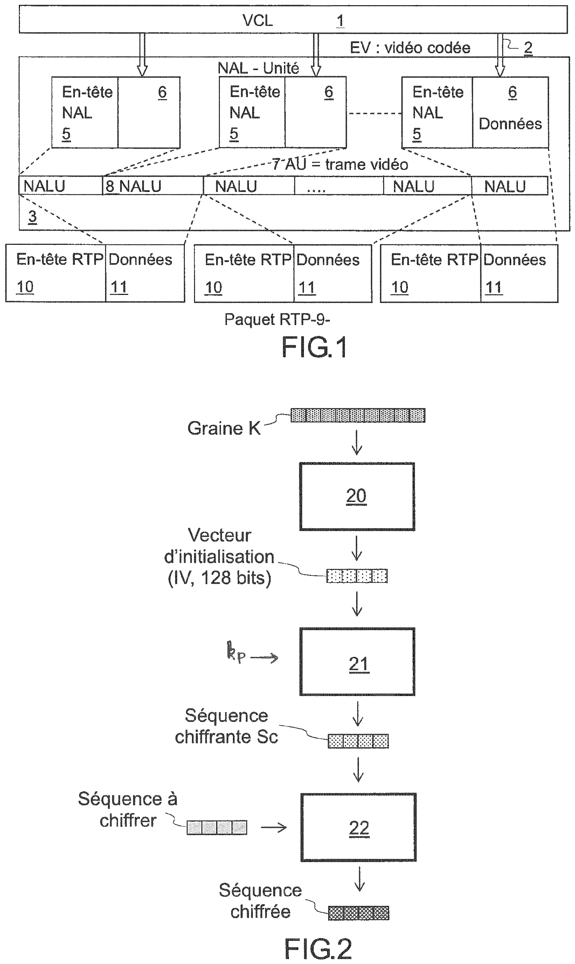

Un rappel est donné en rapport avec la figure 1. Les normes connues de l'homme du métier H.264 (AVC/SVC) et HEVC (SHVC) sont destinées à de multiples usages tels que la diffusion (câble, satellite, modulateur/démodulateur ou modem,..), le stockage, la vidéo à la demande, etc. Pour pallier cette variété des applications cibles, les standards spécifient la notion d'unités de base indépendantes et autonomes ou NALU. Chaque unité de NAL 4 est ainsi dotée d'un entête 5 ou NAL Header, dont les informations peuvent être utilisées par des protocoles de plus haut niveau et de données ou RSBP 6. Deux types de NALUs, 8, coexistent: les unités VCL 1 contenant les données vidéo encodées 2 et les unités non-VCL contenant les informations nécessaires au paramétrage du décodeur. La figure 1 illustre le passage de la couche de codage vidéo VCL au protocole RTP.

L'empaquetage du flux vidéo compressé par le protocole RTP repose sur la mise en paquets d'environ 1400 octets correspondant le plus souvent à une unique NALU du flux vidéo source. Chaque paquet RTP, 9, est doté d'un en-tête (RTP header) 10 constitué d'informations permettant la reconstruction du flux: la source d'émission (synchronization source identifier), le numéro du paquet (séquence number), l'instant d'affichage de la NALU empaquetée (timestamp), etc. et de données 11. Des normes spécifiques, telles que RFC 6184 pour H.264, détaillent la mise en place du protocole RTP pour les flux de données multimédia.

Parmi les méthodes de protection de données, le chiffrement sélectif est une méthode qui ne modifie que certains éléments du flux chiffré afin d'empêcher la reconstruction de l'image à des utilisateurs non autorisés (contenu protégé par dégradation de l'image) tout en conservant le format et la syntaxe du flux, permettant sa lisibilité par n'importe quel décodeur. Une manière de chiffrer le flux peut être celle décrite dans la publication de B.Boyadjis et al, « A real-time ciphering transcoder for H.264/AVC and HEVC streams », IEEE ICIP, proceedings 2014, pour le transcodage de données compressées.

Dans l'exemple qui va être donné à titre illustratif et nullement limitatif, l'algorithme de chiffrement proposé utilise une version modifiée de l'AES-CTR. Le standard AES-CTR (Advanced Encryption Standard Counter Mode) est largement utilisé aujourd'hui de part sa simplicité d'usage et sa robustesse. L'AES est un chiffrement de bloc ayant en entrée une clé de chiffrement et un vecteur d'initialisation IV. La clé de chiffrement est de 128, 192 ou 256 bits, le vecteur d'initialisation IV est une séquence pseudo-aléatoire de 128 bits. Le mode d'opération CTR spécifie un moyen de générer une suite de séquences chiffrantes par l'utilisation successive de différents vecteurs d'initialisation. La faiblesse majeure connue de l'AES en mode CTR est qu'en cas de réutilisation du vecteur d'initialisation, la sécurité des messages ne peut plus être assurée. Ainsi, la procédure généralement recommandée pour mettre en place ce mode de chiffrement est d'utiliser une graine régulièrement incrémentée. L'AES fournit, à partir de la clef de chiffrement et du vecteur d'initialisation, une séquence pseudo-aléatoire de 128 bits, appelée séquence chiffrante dans le cadre de ce brevet. Afin d'opérer les modifications de bits au sein d'un flux de données, chaque bit de la séquence chiffrante est combiné par une opération XOR, par exemple, à un bit original du flux à chiffrer.

Lorsqu'une séquence chiffrante est entièrement consommée, le vecteur d'initialisation est incrémenté pour produire un nouveau vecteur d'initialisation, permettant la génération d'une nouvelle séquence chiffrante de 128 bits. Dans le cadre d'un envoi sur un canal à perte d'un flux protégé par une telle méthode, la perte de données peut causer la désynchronisation de l'incrément et empêcher le déchiffrement des données. Une méthode de partage ou synchronisation des vecteurs d'initialisation est nécessaire. Avantageusement, sa mise en place ne nécessite pas l'envoi de données supplémentaires au sein du protocole RTP.

La figure 2 schématise les étapes pour le chiffrage d'une séquence de données. On va extraire les informations protocolaires liées au protocole de transport et les informations non chiffrables du flux de données Fc, afin de générer une graine K ou séquence de bits. Un vecteur d'initialisation IV (128bits) est généré par un générateur de vecteur d'initialisation 20 à partir de la graine K, le vecteur d'initialisation est actualisé à chaque changement d'un des éléments de la graine K. On spécifie un intervalle d'application du vecteur d'initialisation IV et on chiffre les éléments chiffrables en utilisant une séquence chiffrante Sc issue d'un générateur pseudo-aléatoire 21 prenant en entrée une clé de chiffrement kp et le vecteur d'initialisation IV généré à l'étape b). La séquence chiffrante Sc est utilisée pour chiffrer une séquence F de données à chiffrer au sein d'un module opérateur XOR, 22, pour obtenir une séquence chiffrée Fc. Une graine est constituée à partir d'éléments non chiffrables et non chiffrés extraits du flux de données et d'extraits de l'en-tête de la couche de transport du protocole de transmission utilisé; ces éléments peuvent être combinés par toute opération du type concaténation, adition, XOR.

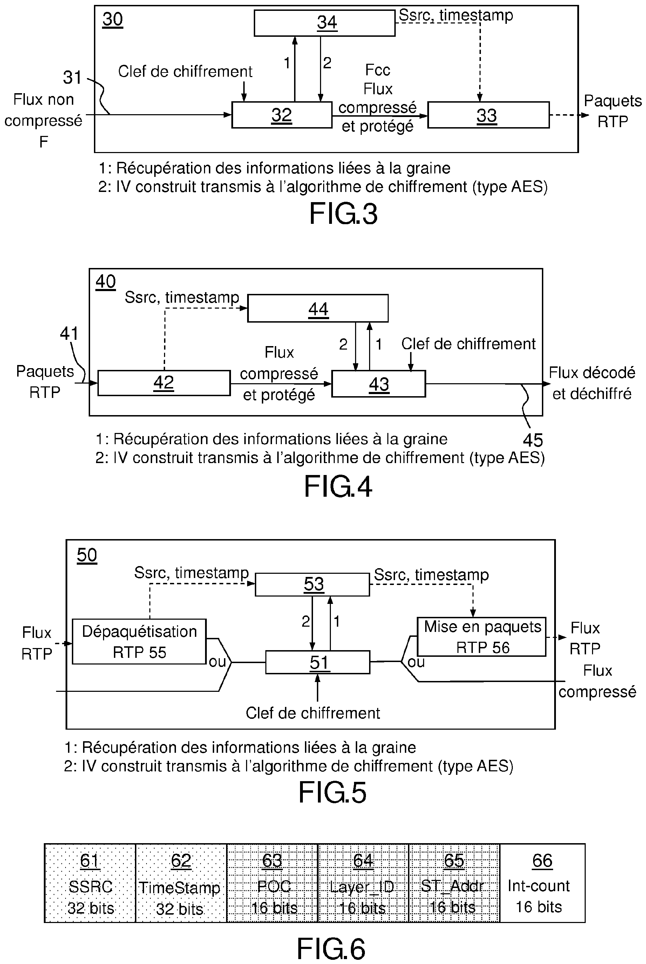

Les figures 3 et 4 représentent des schémas de serveur chiffreur 30 et de client déchiffreur 40.

La figure 3 illustre un exemple d'architecture d'un serveur chiffreur du flux de données Fv, F_{RTP}. Un serveur chiffreur 30 reçoit sur une ou plusieurs entrées 31, un flux de données non compressées Fnc récupéré par exemple en temps réel d'un capteur de type caméra (non représenté sur la figure), qu'il transmet à un module de compression et chiffrement sélectif 32 adapté à chiffrer les données du flux en utilisant une clé de chiffrement kp et un vecteur d'initialisation IV. Le flux de données compressées et chiffrées Fcc est transmis à un module de mise en paquets RTP 33 avant d'être transmis via la sortie 34 sur un réseau de transmission de flux vidéo non représenté pour les raisons de simplification, l'IV est transmis implicitement. Le vecteur d'initialisation IV est généré au moyen d'un générateur de vecteur d'initialisation IV, 34 prenant en entrée une graine constituée à partir d'informations locales, et/ou de niveau supérieur. Le générateur d'IV construit un vecteur d'initialisation IV qui est utilisé par l'algorithme de chiffrement, comme il sera détaillé ci-après, par exemple.

La figure 4 illustre un exemple d'architecture d'un système côté réception 40. Un client qui va déchiffrer le flux vidéo codé Fc comporte un premier module 42 qui dépaquétise les données du flux reçu sur une entrée 41 ; Le flux compressé et protégé est transmis à un module de décompression et de chiffrement sélectif 43, tandis que les données liées à la construction de la graine sont transmises au générateur d'IV 44, le flux de données est décompressé et déchiffré selon l'algorithme de chiffrement sélectif qui reçoit aussi la clé de chiffrement Pk utilisée au niveau du codage et qui va fournir un flux de données vidéo décodé et déchiffré Fv, F_{RTP}, 45.

La figure 5 illustre un exemple de dispositif réalisant un transcodage et un chiffrement sélectif 50. Un flux compressé Fc est transmis à un module 51 de transcodage et de chiffrement sélectif qui reçoit une clé de chiffrement et un vecteur d'initialisation IV fourni par un générateur d'IV 53. Le flux transcodé et chiffré/déchiffré de manière sélective puis envoyé vers un réseau de transmission non représenté. Dans le cas d'un flux RTP, le dispositif 50 comportera un module 55 de dépaquétisation avant transmission au module de transcodage et chiffrement sélectif et un module de mise en paquets au format RTP, 56.

La figure 6 donne un exemple d'éléments constitutifs du vecteur d'initialisation tel qu'il est défini dans la présente mise en oeuvre de l'invention. Pour construire un vecteur d'initialisation, IV, le procédé va générer une graine K uniquement à partir des éléments propres à la couche protocolaire, avec ou sans utiliser des informations non chiffrées et non chiffrables du message vidéo compressé.

Un exemple possible de choix des éléments constitutifs de la graine est donc le suivant :
61 : SSRC (32 bits) ; élément qui représente l'information de l'identifieur de synchronisation de source, qui est contenu dans l'en-tête RTP et qui sert à identifier l'émetteur de la communication.
62 : Timestamp (32 bits) ; information qui est contenue dans l'en-tête RTP ; le timestamp représente l'instant d'affichage relatif de la NALU contenue dans le paquet RTP.
63: POC (16 bits): information liée au codeur/décodeur CODEC, POC désigne la notion de Pic Order Count. Le POC désigne l'ordre d'affichage des images par rapport à l'image de référence l(DR) du groupement d'images (GOP) en cours de codage.
64 : Layer_ID (16 bits) ; information liée au codeur-décodeur ou CODEC, le Layer_ID donne, pour les extensions « scalables » des normes AVC (SVC) et HEVC (SHVC), le numéro de la couche de rehaussement à laquelle appartient la NALU en cours de traitement.
65: ST_Addr (16 bits); information liée au CODEC, ST_Addr désigne l'adresse (i.e. la position par rapport à l'image globale) de début de la tranche plus connue sous le terme anglo-saxon « slice » au sein de l'image.
66 : Int_Count (16 bits) ; compteur interne ou espace réservé du vecteur d'initialisation pour l'application du mode d'opération CTR au sein d'une image. La synchronisation de ce champ compteur entre client et serveur est directement liée à la symétrie de certains dispositifs de transcodage tel que celui décrit dans la publication précitée de Boyadjis et al. Le compteur est dimensionné de façon à garantir le traitement des données entre deux points de synchronisation.

Selon un exemple de réalisation, le module de génération d'IV, 20, réalise une concaténation des éléments ci-dessus. L'architecture proposée pour la construction de la graine identifie la partie réservée aux informations liées à l'image et la partie réservée au protocole de transport. Ainsi, la méthode peut aisément être adaptée à d'autres couches de transport. On associera les bits premiers de l'en-tête du protocole de transport à cette partie réservée de l'IV afin de mettre en place le procédé selon l'invention, 64 bits dans cet exemple.

La présente invention désigne un point de resynchronisation Prs comme un événement déclenché par un changement de la graine. Un point de resynchronisation réinitialise le vecteur d'initialisation IV : la nouvelle graine est constituée, et l'IV correspondant est généré (champ compteur Int_Count remis à zéro). Une telle construction permet de satisfaire la condition d'unicité de chaque vecteur d'initialisation IV, à la seule condition que la graine construite soit unique. La présente invention exploite cette propriété en construisant une graine unique K(NALU) pour chaque NALU de flux compressé protégé Fcp. A l'intérieur d'une NALU, si la séquence chiffrante générée avec le vecteur d'initialisation ainsi construit est entièrement consommée, un nouveau vecteur d'initialisation IV est généré en incrémentant le compteur C, et une nouvelle séquence chiffrante est produite.

Dans l'exemple explicité ci-avant, il faut que chaque NALU VCL transcodée dispose de son vecteur d'initialisation IV(NALU VCL) spécifique et unique. Si deux NALU VCL ne font pas partie de la même image, leur estampille temporelle ou en anglo-saxon le timestamp est différent, sauf en cas de bouclage évoqué un peu plus loin dans la description, et le vecteur d'initialisation est distinct. Dans le cas où deux NALU VCL appartiennent à la même image, elles ont le même timestamp et deux cas se présentent. Soit l'image est décomposée en tranches ou slices en anglo-saxon/ segments/tuiles et l'information de ST_Addr permet d'associer à chaque NALU son propre vecteur d'initialisation. L'autre possibilité est la présence d'une ou de plusieurs couches de rehaussement, dans ce cas l'information de couche d'information ou Layer_ID associe à chaque couche de rehaussement des vecteurs d'initialisation distincts. Dans le cas de la technologie MVC, codage vidéo multivues, on utilisera le champ view_Id connu de l'homme du métier.

Selon une autre variante de réalisation, le flux de données est un flux de données vidéo compressé décomposable en plusieurs unités autonomes NALUs, le protocole de transport est le protocole MMTP, et le procédé va construire une graine K en utilisant l'identifiant de packet « packet_id », l'identifiant « packet_sequence_number » et un paramètre « timestamp » représentatif de l'instant d'affichage contenus dans un en-tête MMTP, l'ordre d'affichage des images par rapport à une image de référence d'un groupement d'images ou GOP en cours de codage, le numéro de la couche de rehaussement, et l'adresse de début de la « slice » au sein de l'image. A l'étape d'initialisation d'une communication avec un protocole MMT, le procédé comporte une étape d'initilisation des paramètres « timestamp », « packet_sequence_number» et « packet_id » en dehors d'une étape de mise en paquets des données vidéo. Le procédé peut aussi générer un aléa supplémentaire sur un nombre de bits de poids faible du « timestamp ».

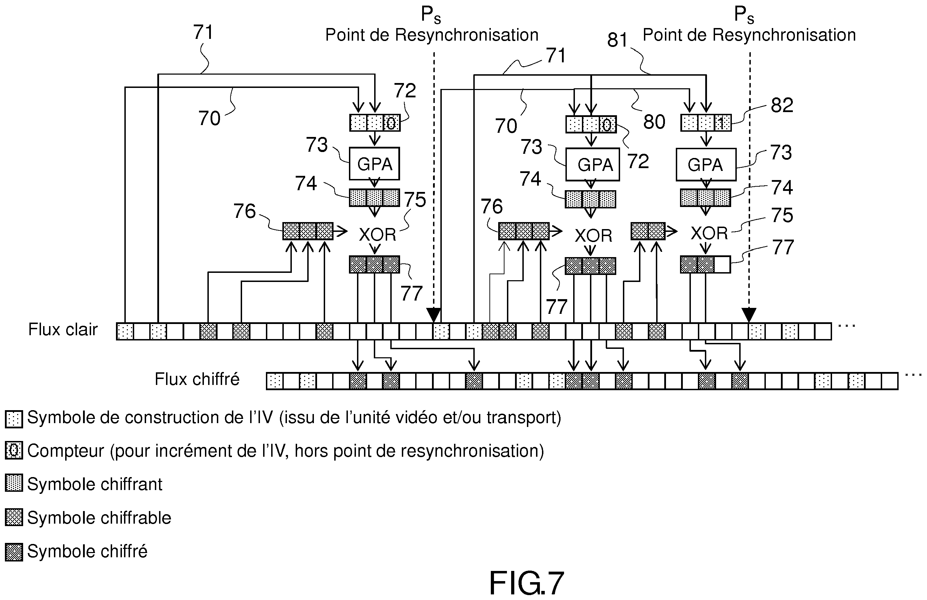

La figure 7 schématise un exemple d'étapes mises en oeuvre par le procédé selon l'invention.

Un ou plusieurs symboles issus de l'unité vidéo et/ou de transport sont extraits du flux vidéo non chiffré F₀. Les éléments ou symboles extraits sont par exemple déterminés en utilisant une table préétablie regroupant les éléments du flux qui ne peuvent être chiffrés, B_{NC}. Ces éléments non chiffrables a priori et extraits 70, 71, le procédé les complète par un compteur Count 72. Par exemple, le procédé va concaténer les éléments en les mettant les uns à la suite des autres. L'ensemble constitué des éléments sélectionnés B_{NCS} et du compteur Int_Count est transmis à un générateur de pseudo-aléa GPA 73 qui va générer une séquence chiffrante (un ou plusieurs éléments chiffrants) 77. La séquence chiffrante est consommée progressivement par l'extraction, pour chaque bit chiffrable par chiffrement sélectif du flux vidéo, 76 d'un bit utilisé de la façon suivante : bit_chiffré=bit_chiffrableXORbit_extrait. Lorsque la séquence chiffrante pseudo-aléatoire initialement générée est vidée, le vecteur d'initialisation est incrémenté et une nouvelle séquence pseudo-aléatoire est générée. Ceci arrive par exemple, lorsque le nombre de bits chiffrables est plus important que la capacité du générateur de pseudo-aléa comme il est illustré sur la partie droite de la figure. Dans un premier temps le procédé génère un premier vecteur d'initialisation IV₁ pour les N premiers bits chiffrables comme il vient d'être décrit, en utilisant dans l'exemple deux symboles extraits du flux en clair, 80, 81, puis il va générer un deuxième vecteur d'initialisation IV₂ en utilisant les mêmes deux symboles extraits 80, 81 et en incrémentant le compteur le faisant passer de zéro à un, 82. Un ensemble de symboles chiffrant est ainsi produit, éventuellement non entièrement consommé. Ceci permet de produire deux vecteurs d'initialisation distincts au sein d'une même unité autonome de codage.

L'architecture choisie pour générer un vecteur d'initialisation selon l'invention permet, lors de la sélection du vecteur d'initialisation, de ne pas utiliser de boucle de retour pour le maintien de la synchronisation. En effet, le SSRC n'évolue pas au sein d'une session RTP et le timestamp, initié aléatoirement, est ensuite pré-calculable, il ne dépend que de la fréquence d'affichage de la vidéo. De la sorte, il est possible de précalculer la graine pour une trame (ou un ensemble de trames), et de débuter le déchiffrement à partir de n'importe quelle NALU du flux compressé.

Le procédé selon l'invention est, par exemple mis en oeuvre soit en utilisant un codeur vidéo modifié, pour chiffrer le contenu et un décodeur vidéo pareillement modifié, ou en utilisant un transcodeur réalisant l'opération de chiffrement.

Le procédé selon l'invention peut être partagé en deux modes de fonctionnement, un premier mode de fonctionnement correspondant à l'initialisation de la communication et un second mode de fonctionnement au régime de fonctionnement standard une fois la communication installée.

Dans le premier mode de fonctionnement, à l'initialisation, le serveur a reçu un flux de données non compressé, qu'il doit retransmettre compressé et chiffré sur le réseau. La norme RFC 3550 donne un exemple de génération d'un tel aléa.

Le premier vecteur d'initialisation IV est constitué en dehors du module de mise en paquet. Dans l'exemple donné, les deux mots SSCR et Timestamp de 32 bits seront ensuite transmis au module de mise en paquets afin d'être utilisés tels quels dans l'en-tête RTP. Le reste de la procédure d'initialisation RTP n'est pas modifié.

Dans le second mode de fonctionnement, une fois la communication mise en place, le SSRC reste constant jusqu'à la fin de la session. Le timestamp change à chaque nouvelle image, en fonction de la fréquence d'affichage de la vidéo source. Le timestamp étant précalculable, il sera par exemple calculé en dehors du module de mise en paquets afin d'être utilisé au niveau du transcodeur pour la constitution du vecteur d'initialisation.

Au cours d'une communication de longue durée, afin d'éviter la réutilisation d'un même vecteur d'initialisation et donc un risque de collision, le procédé génère un aléa supplémentaire sur un nombre de bits Nf de poids faible du timestamp, par exemple sur cinq bits de poids faible du timestamp et/ou sur les 16 bits réservés au compteur. Cet aléa permet notamment d'accroître la robustesse du procédé contre d'éventuelles attaques et minimise le risque de collision. Cette variante s'applique à d'autres protocoles que le protocole RTP.

Du côté client, le procédé comporte des étapes similaires à celles exécutées pour le serveur chiffreur, mais plus simples. Le module de « dépaquetage » réalise d'une part l'extraction du flux, H.264/AVC-SVC ou HEVC-SHEVC, par exemple, et d'autre part l'association des informations de SSRC et de timestamp issues de l'en-tête RTP à chaque NALU extraite. Ces informations permettent de reconstruire les vecteurs d'initialisation à l'identique des vecteurs d'initialisation utilisés au niveau du serveur chiffreur afin de réaliser le déchiffrement symétrique selon des étapes connues de l'homme du métier dans le domaine vidéo avec chiffrement sélectif.

Dans le cas de pertes de paquets, les informations de SSRC et de timestamp étant récupérées dans l'en-tête RTP du paquet finalement reçu, et les informations liées au CODEC nécessaires à la reconstruction du vecteur d'initialisation étant intrinsèquement contenues dans la NALU encapsulée, il n'y a pas d'impact au niveau du déchiffrement. Ainsi, le protocole ou procédé proposé permet une synchronisation issue de la structure même du protocole RTP.

Dans le cas de paquets agrégés AU de type STAP abrégé anglo-saxon de « Single time Agrégation Packet » ou MTAP « Multiple time Agregation Packet », le procédé fonctionne sans spécification supplémentaire. En effet, même si la partie liée au protocole RTP du vecteur d'initialisation est éventuellement identique, par exemple pour les STAPs, la partie *CODEC*-related du vecteur d'initialisation permet d'obtenir un vecteur d'initialisation unique et non équivoque pour chaque couche NALU VCL.

Le procédé selon l'invention s'applique pour différents types de standards de compression vidéo, tels que H.264/AVC, H.265/HEVC, SVC, SHVC, MVC, VP8-9, les extensions « scalables », etc., dans le domaine MPEG.

Constituer une graine suivant l'invention permet de ne pas avoir à transmettre d'information complémentaire à celles contenues dans le flux à transmettre ou dans les en-têtes de la couche de transport permettant la transmission de ce flux. (= transparence de la transmission de la graine). Si les éléments retenus pour constituer la graine évoluent, la graine est mise à jour pour créer un point de resynchronisation.

Le procédé selon l'invention permet ainsi la resynchronisation en tout point d'une vidéo compressée en utilisant des informations liées au contenu vidéo et sans utilisation d'information supplémentaire pour assurer la synchronisation chiffrement/déchiffrement. Il s'adapte aisément à tout type de protocoles de transport utilisés dans le domaine de la vidéo compressée. C'est une solution robuste qui ne nécessite pas l'envoi de données supplémentaires au sein de la session RTP, et n'engendre pas de latence dans le traitement du flux. En cas de pertes de données, le décodeur va pouvoir déchiffrer correctement le reste des données reçues du fait de la réactualisation fréquente de la graine utilisée par l'algorithme de chiffrement, dimensionnée pour le traitement de flux vidéos compressées par les normes H.264/AVC-SVC, HEVC-SHVC par exemple. Le procédé permet de contrôler la robustesse de transmission, la fréquence des points de resynchronisation étant directement liée à la fréquence de changement des éléments constitutifs de la graine.

## Revendications

1. Procédé de synchronisation d'un mécanisme de chiffrement et de déchiffrement de données contenues dans un flux vidéo compressé Fc constitué d'éléments chiffrables et de données non chiffrables, le flux de données vidéo compressé étant décomposable en plusieurs unités autonomes NALUs, au sein d'un système de transmission sécurisé utilisant un protocole de transport et un mode de codage des données, **caractérisé en ce qu'**il comporte au moins les étapes suivantes :
a) Concevoir une graine (K), séquence de bits, uniquement à partir des informations protocolaires liées au protocole de transport temps réel RTP, en utilisant l'identifiant de synchronisation de source SSRC (61) contenu dans un en-tête RTP, un paramètre (62) représentatif de l'instant d'affichage relatif d'une unité autonome NALU contenue dans le paquet RTP, l'ordre d'affichage des images (63) par rapport à une image de référence d'un groupement d'images ou GOP en cours de codage, le numéro de la couche de rehaussement, et l'adresse (65) de début de la « slice » au sein de l'image,
b) Générer (20) un vecteur d'initialisation IV pour le chiffrement à partir de la graine K et actualiser le vecteur d'initialisation à chaque changement d'un des éléments constitutifs de la graine K,
c) Spécifier un intervalle d'application du vecteur d'initialisation IV sur le flux de données et chiffrer (22) les éléments chiffrables en utilisant une séquence chiffrante Sc issue d'un générateur pseudo-aléatoire (21) prenant en entrée une clé de chiffrement kp et le vecteur d'initialisation IV généré à l'étape b).

2. Procédé de synchronisation d'un mécanisme de chiffrement et de déchiffrement de données contenues dans un flux vidéo compressé Fc constitué d'éléments chiffrables et de données non chiffrables, le flux de données vidéo compressé étant décomposable en plusieurs unités autonomes NALUs, au sein d'un système de transmission sécurisé utilisant un protocole de transport et un mode de codage des données, **caractérisé en ce qu'**il comporte au moins les étapes suivantes :
a) Concevoir une graine (K), séquence de bits, uniquement à partir des informations protocolaires liées au protocole de transport, MMTP, et en utilisant l'identifiant de packet « packet_id », l'identifiant « packet_sequence_number » et un paramètre « timestamp » représentatif de l'instant d'affichage contenus dans un en-tête MMTP, l'ordre d'affichage des images par rapport à une image de référence d'un groupement d'images ou GOP en cours de codage, le numéro de la couche de rehaussement, et l'adresse de début de la « slice » au sein de l'image,
b) Générer (20) un vecteur d'initialisation IV pour le chiffrement à partir de la graine K et actualiser le vecteur d'initialisation à chaque changement d'un des éléments constitutifs de la graine K,
c) Spécifier un intervalle d'application du vecteur d'initialisation IV sur le flux de données et chiffrer (22) les éléments chiffrables en utilisant une séquence chiffrante Sc issue d'un générateur pseudo-aléatoire (21) prenant en entrée une clé de chiffrement kp et le vecteur d'initialisation IV généré à l'étape b).

3. Procédé selon l'une des revendications 1 ou 2 **caractérisé en ce que** le flux de données est composé de plusieurs unités et **en ce que** lorsque le nombre d'éléments à chiffrer contenus dans une unité du flux vidéo est supérieur à la taille de la séquence chiffrante générée par le générateur de pseudo-aléa, GPA, le procédé génère dans un premier temps une première séquence chiffrante à partir d'un premier vecteur d'initialisation, puis dans un deuxième temps génère une nouvelle séquence chiffrante avec un mode d'opération cryptographique.

4. Procédé selon l'une des revendications 1 ou 2 **caractérisé en ce que** l'algorithme de chiffrement utilisé est le mode AES.

5. Procédé selon l'une des revendications 1 à 4 **caractérisé en ce que** le mode d'opération de chiffrement choisi est le mode compteur (CTR), et **en ce qu'**un champ compteur de 16 bits initialisé à zéro est alloué dans le processus de génération d'IV.

6. Procédé selon l'une des revendications 1 à 5 **caractérisé en ce que** pour une application H.264/AVC-SVC ou HEVC/SHVC, on introduit un point de resynchronisation au niveau de chaque début de NALU, le point de resynchronisation étant déclenché par un changement de graine.

7. Procédé selon l'une des revendications 1 à 6 **caractérisé en ce qu'**à l'initialisation d'une communication avec un protocole RTP, il comporte une étape d'initialisation des paramètres « timestamp » et SSRC en dehors d'une étape de mise en paquets des données vidéo.

8. Procédé selon l'une des revendications 1 à 6 **caractérisé en ce qu'**en cours de communication utilisant un protocole RTP, le procédé génère un aléa supplémentaire sur un nombre de bits de poids faible du « timestamp ».

9. Procédé selon l'une des revendications 2 à 6 **caractérisé en ce qu'**à l'initialisation d'une communication avec un protocole MMTP, il comporte une étape d'initialisation des paramètres « timestamp », « packet_sequence_number » et « packet_id » en dehors d'une étape de mise en paquets des données vidéo.

10. Procédé selon l'une des revendications 2 à 6 **caractérisé en ce qu'**en cours de communication utilisant un protocole MMTP, il comporte une étape de génération d'un aléa supplémentaire sur un nombre de bits de poids faible du « timestamp ».

11. Procédé selon l'une des revendications 8 à 10 **caractérisé en ce que** le mode d'opération est le mode CTR et **en ce que** l'on génère aussi un aléa sur au moins une partie du champ réservé au compteur.

12. Procédé selon l'une des revendications précédentes **caractérisé en ce que** le vecteur d'initialisation est généré sur 128 bits.

13. Dispositif générateur pseudo-aléatoire d'éléments chiffrant et de point de synchronisation pour un flux de données vidéo décomposable en plusieurs unités autonomes **caractérisé en ce qu'**il comporte au moins les éléments suivants :
• Un module d'extraction d'éléments non chiffrables du flux de données (message vidéo compressé et informations de niveau supérieur) afin de constituer une graine selon l'une des revendications 1 ou 2,
• Un module de génération de vecteurs d'initialisations, utilisant une graine pour générer une séquence de bits, **caractérisé en ce que** le module de génération d'IV est adapté à déclencher un point de resynchronisation à chaque fois que la graine utilisée change, et **en ce que** le vecteur d'initialisation IV est recalculé à chaque point de resynchronisation,
• Un générateur pseudo-aléatoire GPA adapté à générer une séquence chiffrante en utilisant un vecteur d'initialisation et une clef de chiffrement.

14. Dispositif selon la revendication 13 **caractérisé en ce que** l'algorithme de chiffrement est l'algorithme AES.

15. Dispositif selon l'une des revendications 13 ou 14 **caractérisé en ce que** le mode d'opération utilisé est le mode CTR, et le protocole de transport est le protocole RTP.

16. Dispositif selon l'une des revendications 13 ou 14 **caractérisé en ce que** le mode d'opération utilisé est le mode CTR, et le protocole de transport est le protocole MMTP.

## Patentansprüche

1. Synchronisationsverfahren eines Verschlüsselungs- und Entschlüsselungsmechanismus von Daten, die in einem komprimierten Videofluss Fc enthalten sind, bestehend aus verschlüsselbaren Elementen und nicht verschlüsselbaren Daten, wobei der komprimierte Videodatenfluss in mehrere eigenständige Einheiten NALUs zerlegt werden kann, im Rahmen eines abgesicherten Übertragungssystems unter Verwendung eines Transportprotokolls und eines Daten-Codierungsmodus, **dadurch gekennzeichnet, dass** es mindestens die folgenden Schritte umfasst:
a) Konzipieren eines Korns (K), einer Bitfolge, ausschließlich anhand der Protokollinformationen in Verbindung mit dem Echtzeit-Transportprotokoll RTP unter Verwendung der Quellen-Synchronisationskennung SSRC (61), die in einem RTP-Kopf enthalten ist, eines Parameters (62), der den relativen Anzeigezeitpunkt einer eigenständigen Einheit NALU angibt, die im RTP-Paket enthalten ist, der Anzeigereihenfolge der Bilder (63) in Bezug auf ein Referenzbild einer Bildergruppierung oder GOP im Codierungsverlauf, der Nummer der Verstärkungsschicht und der Adresse (65) des Beginns des "Slice" im Rahmen des Bilds,
b) Erzeugen (20) eines Initialisierungsvektors IV für die Verschlüsselung anhand des Korns K und Aktualisieren des Initialisierungsvektors bei jeder Änderung eines der Bestandselemente des Korns K,
c) Spezifizieren eines Anwendungsintervalls des Initialisierungsvektors IV auf den Datenfluss und Verschlüsseln (22) der verschlüsselbaren Elemente unter Verwendung einer Verschlüsselungssequenz Sc, die von einem Pseudo-Zufallsgenerator (21), der als Eingabe einen Verschlüsselungsschlüssel kp und den im Schritt b) erzeugten Initialisierungsvektor IV verwendet.

2. Synchronisationsverfahren eines Verschlüsselungs- und Entschlüsselungsmechanismus von Daten, die in einem komprimierten Videofluss Fc enthalten sind, bestehend aus verschlüsselbaren Elementen und nicht verschlüsselbaren Daten, wobei der komprimierte Videodatenfluss in mehrere eigenständige Einheiten NALUs zerlegt werden kann, im Rahmen eines abgesicherten Übertragungssystems unter Verwendung eines Transportprotokolls und eines Daten-Codierungsmodus, **dadurch gekennzeichnet, dass** es mindestens die folgenden Schritte umfasst:
a) Konzipieren eines Korns (K), einer Bitfolge, ausschließlich anhand der Protokollinformationen in Verbindung mit dem Transportprotokoll MMTP, und unter Verwendung der Paketkennung "packet_id", der Kennung "packet_sequence_number" und eines Parameters "timestamp", der den Anzeigezeitpunkt angibt, die in einem MMTP-Header enthalten sind, der Anzeigereihenfolge der Bilder in Bezug auf ein Referenzbild einer Bildergruppierung oder GOP im Codierungsverlauf, der Nummer der Verstärkungsschicht, und der Adresse des Beginns des "Slice" im Rahmen des Bilds,
b) Erzeugen (20) eines Initialisierungsvektors IV für die Verschlüsselung anhand des Korns K und Aktualisieren des Initialisierungsvektors bei jeder Änderung eines der Bestandselemente des Korns K,
c) Spezifizieren eines Anwendungsintervalls des Initialisierungsvektors IV auf den Datenfluss und Verschlüsseln (22) der verschlüsselbaren Elemente unter Verwendung einer Verschlüsselungssequenz Sc, die von einem Pseudo-Zufallsgenerator (21), der als Eingabe einen Verschlüsselungsschlüssel kp und den im Schritt b) erzeugten Initialisierungsvektor IV verwendet.

3. Verfahren nach einem der Ansprüche 1 oder 2, **dadurch gekennzeichnet, dass** der Datenfluss aus mehreren Einheiten besteht und dass, wenn die Anzahl der in einer Einheit des Videoflusses enthaltenen zu verschlüsselnden Elemente größer als die Größe der Verschlüsselungssequenz ist, die von dem Pseudo-Zufallsgenerator GPA erzeugt wird, das Verfahren in einem ersten Moment eine erste Verschlüsselungssequenz anhand eines ersten Initialisierungsvektors erzeugt, und dann in einem zweiten Moment eine neue Verschlüsselungssequenz mit einer kryptographischenv Betriebsmodus erzeugt.

4. Verfahren nach einem der Ansprüche 1 oder 2 **dadurch gekennzeichnet, dass** der verwendete Verschlüsselungsalgorithmus der Modus AES ist.

5. Verfahren nach einem der Ansprüche 1 bis 4, **dadurch gekennzeichnet, dass** der gewählte Verschlüsselungs-Betriebsmodus der Zählermodus (CTR) ist und dass ein auf null initialisiertes Zählerfeld mit 16 Bit im Erzeugungsprozess von IV zugewiesen wird.

6. Verfahren nach einem der Ansprüche 1 bis 5, **dadurch gekennzeichnet, dass** für eine Anwendung H.264/AVC-SVC oder HEVC/SHVC ein Re-Synchronisationspunkt auf an jedem NALU-Beginn eingeführt wird, wobei der Re-Synchronisationspunkt durch eine Änderung des Korns ausgelöst wird.

7. Verfahren nach einem der Ansprüche 1 bis 6, **dadurch gekennzeichnet, dass** es bei Initialisierung einer Kommunikation mit einem RTP-Protokoll einen Initialisierungsschritt der Parameter "timestamp" und SSRC außerhalb eines Schritts der Ablage von Videodaten in Pakete umfasst.

8. Verfahren nach einem der Ansprüche 1 bis 6, **dadurch gekennzeichnet, dass** das Verfahren im Kommunikationsverlauf unter Verwendung eines RTP-Protokoll einen zusätzlichen Zufallswert über eine Bitzahl schwachen Gewichts des "timestamp" erzeugt.

9. Verfahren nach einem der Ansprüche 2 bis 6, **dadurch gekennzeichnet, dass** es bei Initialisierung einer Kommunikation mit einem MMTP-Protokoll einen Initialisierungsschritt der Parameter "timestamp", "packet_sequence_number" und "packet_id" außerhalb eines Schritts der Ablage von Videodaten in Pakete umfasst.

10. Verfahren nach einem der Ansprüche 2 bis 6, **dadurch gekennzeichnet, dass** es im Kommunikationsverlauf unter Verwendung eines MMTP-Protokolls einen Schritt der Erzeugung eines zusätzlichen Zufallswerts über eine Bitzahl schwachen Gewichts des "timestamp" erzeugt.

11. Verfahren nach einem der Ansprüche 8 bis 10, **dadurch gekennzeichnet, dass** der Betriebsmodus der Modus CTR ist und dass auch ein Zufallswert über mindestens einen Teil des dem Zähler vorbehaltenen Felds erzeugt wird.

12. Verfahren nach einem der vorherigen Ansprüche, **dadurch gekennzeichnet, dass** der Initialisierungsvektor über 128 Bits erzeugt wird.

13. Pseudo-Zufallsgeneratorvorrichtung für verschlüsselnde und Synchronisationspunkt-Elemente für einen zerlegbaren Videodatenfluss in mehrere eigenständige Einheiten, **dadurch gekennzeichnet, dass** sie mindestens die folgenden Elemente umfasst:
• ein Extraktionsmodul nicht verschlüsselbarer Elemente des Datenflusses (komprimierte Videonachricht und Informationen höherer Ebene), um ein Korn gemäß einem der Ansprüche 1 oder 2 zu bilden,
• ein Erzeugungsmodul für Initialisierungsvektoren unter Verwendung eines Korns zum Erzeugen einer Bitfolge, **dadurch gekennzeichnet, dass** das Erzeugungsmodul von IV angepasst ist, um bei jeder Änderung des verwendeten Korns einen Re-Synchronisationspunkt auszulösen, und dass der Initialisierungsvektor IV an jedem Re-Synchronisationspunkt neu berechnet wird,
• einen Pseudo-Zufallsgenerator GPA, der angepasst ist, um eine Verschlüsselungssequenz unter Verwendung eines Initialisierungsvektors und eines Verschlüsselungsschlüssels zu erzeugen.

14. Vorrichtung nach Anspruch 13, **dadurch gekennzeichnet, dass** der Verschlüsselungsalgorithmus der Algorithmus AES ist.

15. Vorrichtung nach einem der Ansprüche 13 oder 14 **dadurch gekennzeichnet, dass** der verwendete Betriebsmodus der Modus CTR und das Transportprotokoll das Protokoll RTP ist.

16. Vorrichtung nach einem der Ansprüche 13 oder 14 **dadurch gekennzeichnet, dass** der verwendete Betriebsmodus der Modus CTR und das Transportprotokoll das Protokoll MMTP ist.

## Claims

1. A method of synchronizing an encryption and decryption mechanism for data contained in a compressed video stream Fc made up of encryptable elements and non-encryptable data, the compressed stream of video data being able to be broken down into a number of autonomous units NALUs within a protected transmission system using a transport protocol and a data encoding mode, **characterised in that** it comprises at least the following steps:
a) devising a seed (K), a sequence of bits, purely on the basis of the protocol information linked to the real time transport protocol RTP, using the source synchronisation identifier SSRC (61) contained in an RTP header, a parameter (62) representing the relative instant of display of an autonomous unit NALU contained in the RTP packet, the order of displaying the images (63) in relation to a reference image of a group of images or GOP during the encoding, the number of the enhancing layer, and the starting address (65) of the "slice" within the image,
b) generating (20) an initialisation vector IV for the encryption on the basis of the seed K and up-dating the initialisation vector upon each change of one of the elements making up the seed K,
c) specifying an application interval for the initialisation vector IV on the data stream and encrypting (22) the encryptable elements using an encrypting sequence Sc taken from a pseudorandom generator (21) taking as input an encryption key kp and the initialisation vector IV generated in step b).

2. A method of synchronizing an encryption and decryption mechanism for data contained in a compressed video stream Fc made up of encryptable elements and non-encryptable data, the compressed stream of video data being able to be broken down into a number of autonomous units NALUs within a protected transmission system using a transport protocol and a data encoding mode, **characterised in that** it comprises at least the following steps:
a) devising a seed (K), a sequence of bits, purely on the basis of the protocol information linked to the transport protocol, MMTP, and using the packet identifier "packet_id", the "packet_sequence_number" identifier and a "timestamp" parameter representing the instant of display contained in a header MMTP, the order of displaying the images in relation to a reference image of a group of images or GOP during the encoding, the number of the enhancing layer, and the starting address of the "slice" within the image,
b) generating (20) an initialisation vector IV for the encryption on the basis of the seed K and up-dating the initialisation vector upon each change of one of the elements making up the seed K,
c) specifying an application interval for the initialisation vector IV on the data stream and encrypting (22) the encryptable elements using an encrypting sequence Sc taken from a pseudorandom generator (21) taking as input an encryption key kp and the initialisation vector IV generated in step b).

3. The method according to either of Claims 1 or 2, **characterised in that** the data stream is made up of a number of units and **in that** when the number of elements to be encrypted contained in a video stream unit is greater than the size of the encrypting sequence generated by the pseudorandom generator, GPA, the method initially generates a first encrypting sequence on the basis of a first initialisation vector, then secondly generates a new encrypting sequence with a cryptographic operation mode.

4. The method according to either of Claims 1 or 2, **characterised in that** the encryption algorithm used is the AES mode.

5. The method according to any of Claims 1 to 4, **characterised in that** the chosen encryption mode of operation is the counter mode (CTR), and **in that** a counter range of 16 bits initialised at zero is allocated in the IV generation process.

6. The method according to any of Claims 1 to 5, **characterised in that** for an H.264/AVC-SVC or HEVC/SHVC application, a re-synchronisation point is introduced at each NALU start, the re-synchronisation point being triggered by a seed change.

7. The method according to any of Claims 1 to 6, **characterised in that** upon the initialisation of a communication with an RTP protocol, it comprises a step of initialising the "timestamp" and SSRC parameters outside of a step of placing the video data in packets.

8. The method according to any of Claims 1 to 6, **characterised in that** during communication using an RTP protocol, the method generates an additional random over a low-weight bit number of the "timestamp".

9. The method according to any of Claims 2 to 6, **characterised in that** upon initialisation of a communication with an MMTP protocol, it comprises a step of initialising "timestamp", "packet_sequence_number" and "packet_id" parameters outside of a step of placing video data in packets.

10. The method according to any of Claims 2 to 6, **characterised in that** during communication using an MMTP protocol, it comprises a step of generating an additional random over a low-weight bit number of the "timestamp".

11. The method according to any of Claims 8 to 10, **characterised in that** the mode of operation is the CTR mode, and **in that** one also generates a random over at least part of the range reserved for the counter.

12. The method according to any of the preceding claims, **characterised in that** the initialisation vector is generated over 128 bits.

13. A pseudorandom generator device of encryptable elements and of synchronisation point for a video data stream that can be broken down into a number of autonomous units, **characterised in that** it comprises at least the following elements:
• a module for extracting non-encryptable elements from the data stream (compressed video message and higher level information) in order to form a seed according to either of Claims 1 or 2,
• an initialisation vector generation module, using a seed to generate a sequence of bits, **characterised in that** the IV generation module is adapted to trigger a resynchronisation point each time the seed that is used changes, and **in that** the initialisation vector IV is recalculated at each re-synchronisation point,
• a pseudo-random generator GPA adapted to generate an encrypting sequence using an initialisation vector and an encryption key.

14. The device according to Claim 13, **characterised in that** the encryption algorithm is the AES algorithm.

15. The device according to either of Claims 13 or 14, **characterised in that** the mode of operation used is the CTR mode, and the transport protocol is the RTP protocol.

16. The device according to either of Claims 13 or 14, **characterised in that** the mode of operation used is the CTR mode, and the transport protocol is the MMTP protocol.
